# EUROPEAN PATENT SPECIFICATION

(11) **EP 2 046 019 B1**
(45) Date of publication and mention of the grant of the patent: **07.09.2011**
(21) Application number: 07791697.1
(22) Date of filing: 31.07.2007
(51) Int. Cl.: H04N 5/232, H04N 5/225

(54) **CAMERA CONTROL DEVICE AND CAMERA CONTROL SYSTEM**
KAMERASTEUEREINRICHTUNG UND KAMERASTEUERSYSTEM
DISPOSITIF ET SYSTEME DE COMMANDE DE CAMERA

(30) Priority: 02.08.2006 JP 2006210894
(43) Date of publication of application: 08.04.2009
(73) Proprietor: Panasonic Corporation, Kadoma-shi Osaka 571-8501 (JP)
(72) Inventor: KOGANE, Haruo, c/o Panasonic Corp., IPROC, Chuo-ku, Osaka-shi, Osaka 540-6207 (JP)
(74) Representative: Pautex Schneider, Nicole Véronique
(86) International application number: PCT/JP2007/065013
(87) International publication number: WO 2008/016058

(56) References cited:
- EP-A1- 1 619 897
- JP-A- 11 331 828
- JP-A- 2000 032 435
- JP-A- 2004 128 646
- JP-A- 2004 266 404
- JP-A- 2006 041 611
- US-A1- 2004 119 819
- US-A1- 2006 126 738

## Description

### Technical Field

The present invention relates a camera control apparatus and a camera control system each of which operates a plurality of cameras cooperatively so as to image the same subject to be imaged.

### Background Art

Conventionally, there is proposed a camera control apparatus which operates a plurality of cameras cooperatively so as to image the same subject to be imaged (see a patent document 1, for example). The patent document 1 discloses a technique that a sub camera receives a signal from a main camera to thereby perform a control in accordance with the signal.

Patent document 1: JP-A-2003-284050

### Disclosure of the invention

### Problems that the Invention is to Solve

However, in the camera control apparatus of the related art, the main and sub cameras are required to be set on a menu screen etc. Thus, when the main camera can not track the subject, the main camera is required to be set again on the menu screen etc. As a result, there arises a problem that in the case of automatically tracking a moving subject to be imaged, the subject may be lost from a monitor screen.

EP 1619897 discloses a personal computer that is a control device, which provides master camera direction information that instructs a direction of a master camera selected from camera devices to the camera devices including the master camera. Each camera device stores relative position information about the camera itself and the other cameras. Each camera device transforms master camera direction information to slave camera direction information based on relative position information when one of the other cameras is the master camera. The slave camera direction information is that of a direction that allows a camera to follow the master camera as a slave camera. Each camera device controls a rotating mechanism of the camera in accordance with the master camera direction information when it is the master camera, and in accordance with the slave camera direction information when it is not the master camera.

The invention is made in view of the aforesaid circumstances and an obj ect of the invention is to provide a camera control apparatus and a camera control system each of which can, in the case of automatically tracking a moving subject to be imaged, automatically track the subject to be imaged without being lost from a monitor screen.

### Means for Solving the Problems

The aforesaid object is attained by the following configurations.
The present invention relates to a camera control system according to claim 1.

According to this configuration, in the case of automatically tracking a moving subject to be imaged, the subject to be imaged can be automatically tracked without being lost from a monitor screen.

The camera control apparatus according to the invention is configured in a manner that the main camera determining means determines the camera, an image from which is displayed on a main monitor, as the main camera.

According to this configuration, since the main monitor always displays an image from the camera acting as the main camera, a surveillant can always confirm a subject to be imaged on the main monitor. Further, by selecting a camera an image from which is to be displayed on the main monitor, the main camera can be selected automatically, and so the surveillant is not required to perform any additional operation, advantageously.

The camera control apparatus according to the invention is configured to include: an image obtaining means which obtains respective images from the plurality of the cameras; and an all camera information obtaining means which obtains information including characteristic data representing features of subjects such as persons or things and moving directions of a subject to be imaged and view angle size information of all the cameras based on the images from the plurality of the cameras obtained-by the image obtaining means, wherein
the main camera determining means determines the main camera based on the information of all the cameras obtained by the all camera information obtaining means.

Accordingly, since the main camera can be determined automatically from the images of all the cameras, a surveillant is not required to perform an operation for determining the main camera, advantageously.

The camera control apparatus according to the invention is configured in a manner that the all camera information obtaining means inputs the images from all the cameras into an image recognition device and obtains the information analyzed by the image recognition device.

According to this configuration, since the main camera can be determined automatically from the various kinds of information analyzed by the image recognition device, a surveillant is not required to perform an operation for determining the main camera, advantageously.

### Effects of the invention

According to the invention, in the case of automatically tracking a moving subject to be imaged, the subject to be imaged can be automatically tracked without being lost from the monitor screen.

### Brief Description of the Drawings

Fig.1 is a block diagram showing the schematic configuration of a camera control system according to an embodiment of the invention.
Fig.2 is a block diagram showing the schematic configuration of the camera of the camera control system according to the embodiment of the invention.
Fig. 3 is a diagram showing an example of a positional information table used in the camera control system according to the embodiment of the invention.
Fig. 4 is a flowchart for explaining the camera direction control processing for the camera control system according to the embodiment of the invention.
Fig. 5 is a flowchart for explaining the processing of generating the main camera direction of the camera control system according to the embodiment of the invention.
Fig. 6 is a diagram for concretely explaining the camera control system according to the embodiment of the invention.
Fig. 7 is a diagram for concretely explaining the camera control system according to the embodiment of the invention.
Fig. 8 is a diagram for concretely explaining the camera control system according to the embodiment of the invention.

### Explanation of symbols

- 30: control portion
- 31: image pickup portion
- 32: rotary mechanism
- 33: image output portion
- 34: communication portion
- 100: camera control system
- 101,: 101₁, 101₂, 101₃ camera
- 102: main monitor
- 103₁ to 103ₙ: sub monitor
- 104: recording device
- 105: image recognition device
- 106: external sensor
- 107: communication portion
- 108: camera control table
- 109: camera control apparatus
- 301: main/sub determination portion
- 302: main camera specifying portion
- 303: direction information converting portion
- 304: positional information table storage portion
- 305.: rotary control portion

### Best Mode for Carrying Out the Invention

Hereinafter, the preferred embodiment for implementing the invention will be explained with reference to drawings.

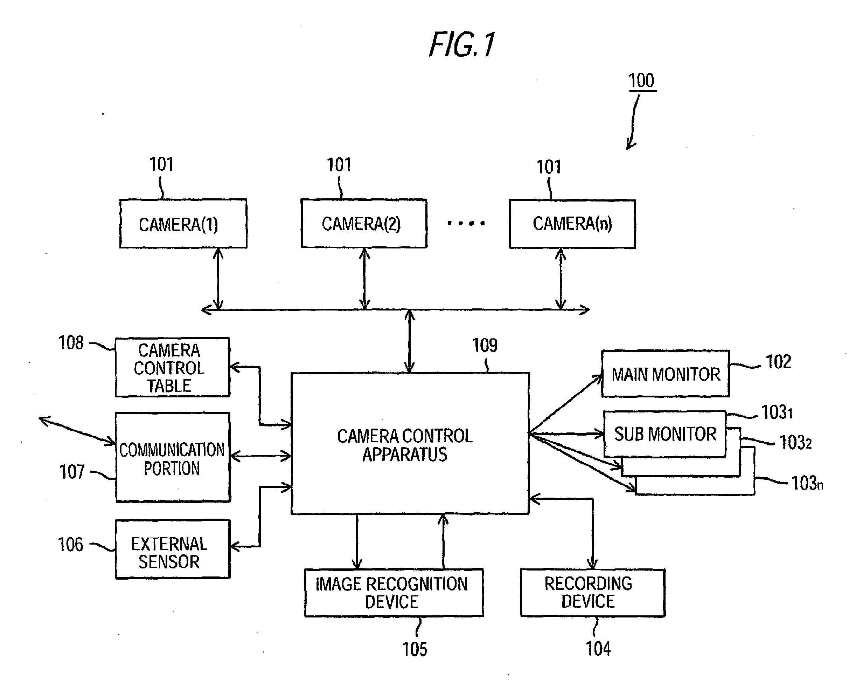

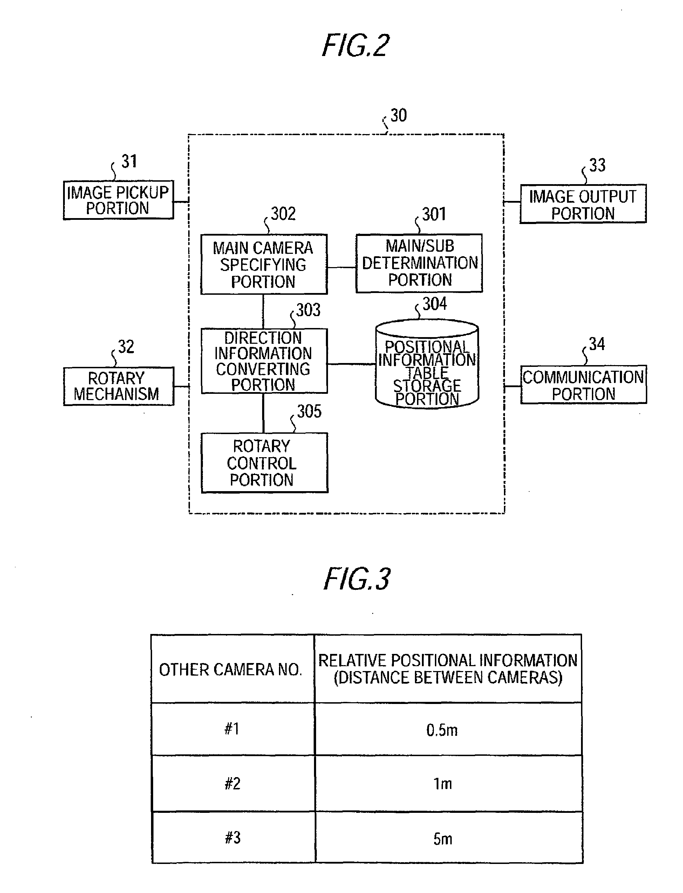

Fig.1 is a block diagram showing the schematic configuration of a camera control system according to the embodiment. In the figure, the camera control system 100 according to the embodiment is configured to include a plurality of cameras 101, a main monitor 102, a plurality of sub monitors 103, a recording device 104, an image recognition device 105, an external sensor 106, a communication portion 107, a camera control table 108 and a camera control apparatus 109. Each of the cameras 101 picks-up an image of a subject to be imaged and outputs an imaged signal. When this system is employed for the use of surveillance, subjects to be imaged are persons, things, cars in a parking space etc. Fig. 2 is a block diagram showing the schematic configuration of the camera 101. In the invention described later, a camera acting mainly is called a main camera 101m and a camera acting subordinately is called a sub camera 101s. As shown in Fig. 2, the camera 101 is configured to include a control portion 30, an image pickup portion 31, a rotary mechanism 32, an image output portion 33 and a communication portion 34.

In the camera 101, the control portion 30 controls respective portions of the camera. The image pickup portion 31 includes an image-pickup element such as a CCD (charge coupled device) or a CMOS (complementary metal oxide semiconductor) and outputs an imaged signal. The imaged signal from the image pickup portion 31 is inputted into the control portion 30. The rotary mechanism 32 includes a panning mechanism and a tilting mechanism. The panning mechanism is moved by a panning motor and the tilting mechanism is moved by a tilting motor. The rotary mechanism 32 is controlled by the control portion 30 to move a camera main body in the panning and tilting directions. The image output portion 33 outputs to the outside the imaged signal which is inputted into the control portion 30 from the image pickup portion 31.

In this embodiment, the imaged signal inputted into the control portion 30 from the image pickup portion 31 is applied to the camera control apparatus 109. The communication portion 34 communicates bidirectionally with the camera control apparatus 109 so as to input the imaged signal from the image pickup portion 31 to the camera control apparatus 109 and to receive control data from the camera control apparatus 109. When the communication portion receives the control data from the camera control apparatus 109, the communication portion inputs the control data to the control portion 30. In particular, at the time rotating the camera 101, main camera direction information is inputted as the control data. In this case, the control data is taken into the control portion even if the main camera direction information is used for another camera 101.

As shown in Fig. 2, the control portion 30 includes a main/sub determination portion 301, a main camera specifying portion 302, a direction information converting portion 303, a positional information table storage portion 304 and a rotary control portion 305. The main/sub determination portion 301 determines whether or not own cameral 101 is the main cameral 101m based on an address contained in the main camera direction information transmitted from the camera control apparatus 109 in a manner that the own camera 101 is determined as the main camera 101m when the address is the address of the own camera 101. In contrast, when the address is not the address of the own camera, the determination portion operates to specify the main camera 101m among the remaining cameras 101. That is, in order to specify the main camera 101m among the remaining cameras 101, the determination portion checks the address contained in the main camera direction information to search the camera 101 of this address to thereby specify the camera having this address as the main camera 101m.

The direction information converting portion 303 operates when the own camera 101 is not the main camera 101m. In this case (that is, in the case of the sub camera 101s), the main camera direction information is converted into sub camera direction information based on relative positional information between the own camera 101 as the sub camera 101s and the other camera 101 as the main camera 101m. The sub camera direction information is direction information for making the own camera 101 track the main camera 101m as the sub camera 101s. The relative positional information between the own camera 101 as the sub camera 101s and the other camera 101 as the main camera 101m is sto.red in the positional information table storage portion 304. In this case, the relative positional information is represented by a distance between the both cameras.

Fig. 3 is a diagram showing an example of a positional information table. The positional information table shown in this figure stores relative positions between the own camera 101 and other three cameras 101. In this embodiment, the heights of all the cameras 101 are set to be same and also the angles of the origins of the horizontal rotation of all the cameras are set to be same.

Return to Fig. 2, the direction information converting portion 303 reads the relative positional information of the main camera 101m specified by the main camera specifying portion 302 based on the three relative positional information of the positional information table and converts the main camera direction information into the sub camera direction information based on the relative positional information thus read. In this manner, it is determined whether or not the own camera 101 is the main camera 101m based on the address contained in the main camera direction information transmitted from the camera control apparatus 109, then the own camera 101 is determined as the main camera 101mwhen the contained address is the address of the own camera 101, then the main camera 101m is specified among the remaining cameras 101 when the contained address is not the address of the own camera, and the main camera direction information is converted into the sub camera direction information based on the relative positional information between the specified main camera 101m and the own camera 101. The rotary control portion 305 performs the rotation control of the main body of the own camera in accordance with the main camera direction information when the own camera 101 is the main camera 101m, whilst performs the rotation control of the main body of the own camera in accordance with the sub camera direction information when the own camera 101 is the sub camera 101s.

Return to Fig. 1, the main monitor 102 is used for displaying an image from the camera 101 serving as the main camera 101m among the plurality of cameras 101. The sub monitors 103₁, 103₂, ----, 103ₙ are used for displaying images from the cameras 101 serving as the sub cameras 101s, respectively. Since only one camera 101 is set as the main camera 101m, the sub monitors 103₁, 103₂, ----, 103ₙ display images from the remaining cameras 101 (that is, the sub cameras 101s) except for the camera 101 serving as the main camera 101m, respectively.

The recording device 104 is used for recording a still image and a moving image (possibly including sound). In this embodiment, although the recording device 104 is disposed in adjacent to the apparatus 104, the recording device may be disposed at a remote and transmit/receive data via a network. The image recognition device 105 has functions of performing image recognition of images from all the cameras 101, generating characteristic data representing the features of subjects such as persons or things, extracting the moving directions of persons or things and the changes of size information of view angles, analyzing various information including the characteristic data, the moving directions and the view angle sizes and inputting the analyzed results into the camera control apparatus 109. The external sensor 106 is disposed in adjacent to each of the cameras 101 and is used for detecting a subject to be imaged approaching the corresponding camera 101. For example, an infrared ray is used for detecting a subject to be imaged. The communication portion 107 is coupled to a network such as an internet to thereby enable the camera control apparatus to communicate with an external device (not shown). The camera control table 108 operates to select the camera 101 an image from which is displayed on the main monitor 102 and to set the view angle and image quality of the selected camera 101. The setting of the image quality includes the settings of "a panning angle", "a tilting angle" and "a magnification of the view angle". The camera control table 108 can set the operation of the camera control apparatus 109 and can switch between cooperation and non-cooperation among the cameras.

The camera control apparatus 109 includes a function (an image obtaining means) of obtaining respective images from the plurality of the cameras 101; a function of inputting the respective images thus obtained from the plurality of the cameras 101 into the image recognition device 105; a function (an all camera information obtaining means) of receiving information (various kinds of information such as the characteristic data, the moving directions, the view angle size information of all the cameras) with respect to the images (still images or motion images) from the plurality of the cameras 101 inputted from the image recognition device 105; a function (a main camera determining means, a main camera direction information generating means) of specifying the camera 101 serving as the main camera 101m from the various kinds of information of all the cameras thus received, then generating the main camera direction information including the address of the specified camera 101 and simultaneously transmits the main camera direction information to all the cameras 101; a function of switching between the main camera 101m and the sub cameras 101s; a function of displaying the images from the plurality of the cameras 101 on the monitors 102, 103₁, 103₂, ----, 103ₙ; a function of selectively transmitting the images from the plurality of the cameras 101 to a remote display device (not shown) by using the communication portion 107; a function (a recording control means) of extracting only an optimum portion of the image from each of the plurality of the cameras 101, then subjecting the extracted images to the compression processing by using JPEG (joint photographic experts group) or MPEG (moving picture experts group) and storing in the recording device 104; a function of expanding the compressed data stored in the recording device 104 and transmitting to the external device via the communication portion 107; and a function of obtaining states such as a recording time and a recording state of the recording device 104 and a remaining capacity of a recording medium etc.

Since only the optimum portions of the images are stored in the recording device 104, the recording device can record for a long time. Further, an amount of data to be transmitted to the network can be made small without degrading the quality of the data. Furthermore, at the time of transmitting data to the external device, an image (still image or motion image) is directly transmitted or transferred via a server in accordance with required information after performing personal authentication. Each of the monitors 102, 103₁, 103₂, ----, 103ₙ may be a television monitor for displaying an image or a personal computer etc. coupled to the apparatus via the network.

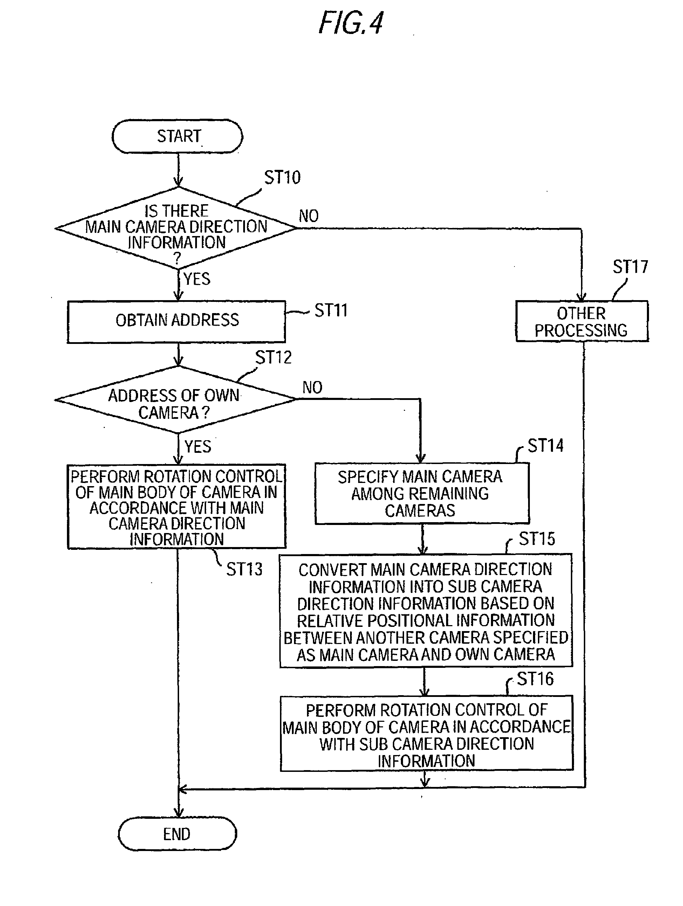

Next, the operation of the camera control system thus configured will be explained. Fig. 4 is a flowchart for explaining the camera direction control processing for the camera 101. In the figure, firstly the presence or non-presence of the main camera direction information is determined (step ST10). That is, it is determined whether or not the main camera direction information is inputted from the camera control apparatus 109. When the main camera direction information is inputted, an address contained in the main camera direction information is obtained (step ST11). Next, it is determined whether or not the obtained address is the address of the own camera (step ST12). When the obtained address is the address of the own camera, the rotation control of the main body of the own camera is performed in accordance with the inputted main camera direction information (step ST13). That is, the own camera acts as the main camera 101m to thereby perform the control of tracking a subject to be imaged.

In contrast, when it is determined in the step ST12 that the address obtained from the inputted main camera direction information is not the address of the own camera, the camera having the corresponding address is searched among the remaining cameras 101 and the searched camera is specified as the main camera 101m (step ST14). Then, the main camera direction information is converted into the sub camera direction information based on the relative positional information between the specified camera 101 and the own camera 101 (step ST15) to thereby perform the rotation control of the main body of the own camera in accordance with the sub camera direction information (step ST16). That is, the own camera acts as the sub camera 101s to thereby perform the control of tracking a subject to be imaged. When the main camera direction information is not inputted in the determination of the step ST10, other processing is performed (step ST17).

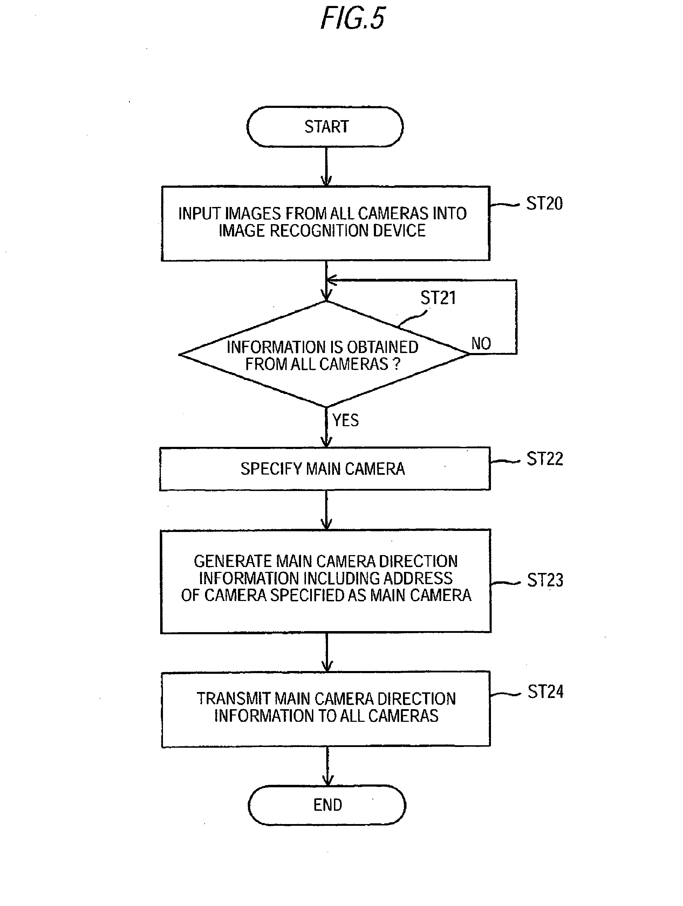

Fig. 5 is a flowchart for explaining the processing of generating the main camera direction information of the camera control apparatus 109. In the figure, firstly images from all the cameras 101 are inputted into the image recognition device 105 (stepST20). Then, the image recognition device 105 analyzes the images from all the cameras 101 and transmits the analyzed information (various kinds of information such as the characteristic data, the moving directions, the view angle size information) of all the cameras 101 to the camera control apparatus 109. The camera control apparatus 109 determines whether or not the information (the various kinds of information such as the characteristic data, the moving directions, the view angle size information) of all the cameras 101 is transmitted (step ST21). This determining processing is repeatedly executed until the information of all the cameras 101 is transmitted. Although the information of all the cameras 101 is analyzed by the image recognition device 105, the information may be analyzed by the camera control apparatus 109. Further, alternatively, the information may be analyzed by all the cameras 101 and the analyzed information may be transmitted to the camera control apparatus 109.

When the information of all the cameras 101 is transmitted, the camera control apparatus 109 specifies the main camera 101m based on the respective information (step ST22) . Then, after specifying the main camera 101m, the camera control apparatus generates the main camera direction information including the address of the specified camera 101 (step ST23) and simultaneously transmits the main camera direction information thus generated to all the cameras 101 (step ST24).

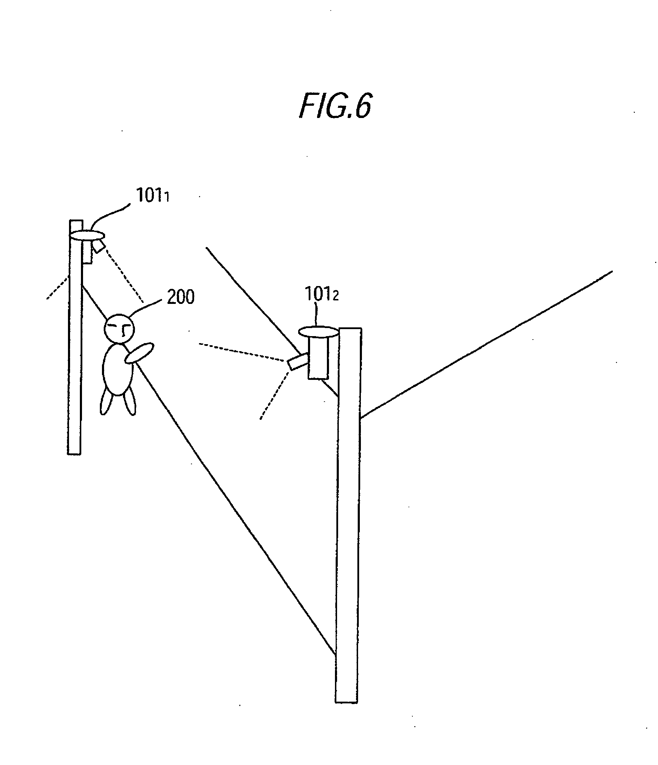

Fig. 6 is a diagram showing a state where the camera 101₁ images the front side of a subject to be imaged 200 almost just beneath the camera 101₁ serving as the main camera 101m. The camera control apparatus 109 displays an image from the camera 101₁ serving as the main camera 101m on the main monitor 102 and also displays an image from the camera 101₂ serving as the sub camera 101s on the sub monitor 103. The camera 101₂ serving as the sub camera 101s obtains the sub camera direction information so as to be directed to the same direction as the camera 101₁ serving as the main camera 101m. A surveillant operates the camera control table 108 while watching the main monitor 102 on which the image from the camera 101₁ serving as the main camera 101m is displayed.

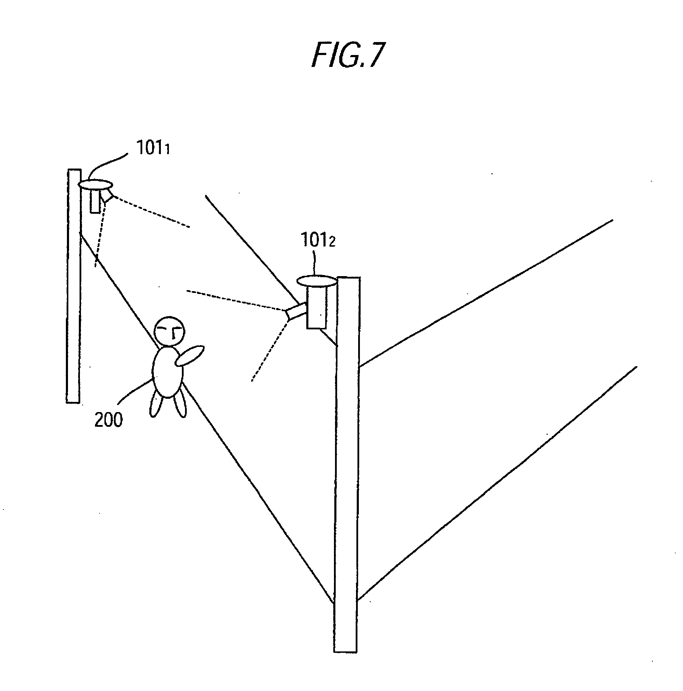

Fig. 7 is a diagram showing a state that the subject 200 passes a point just beneath the camera 101₁ serving as the main camera 101m and the camera 101₂ serving as the sub camera 101s can image the front side of the subject 200. In this case, the main camera determining means switches the main camera to the camera 101₂ from the camera 101₁. Further, since the camera 101₁ is set to cooperate with the camera 101₂ by the camera control apparatus 109, the sub camera 101s is replaced by the main camera 101m, whereby the camera 101₁ acts as the sub camera 101s and the camera 101₂ acts as the main camera 101m. Furthermore, simultaneously, the monitors for displaying the images are also switched, whereby the image from the camera 101₂ is displayed on the main monitor 102 and the image from the camera 101₁ is displayed on the sub monitor 103.

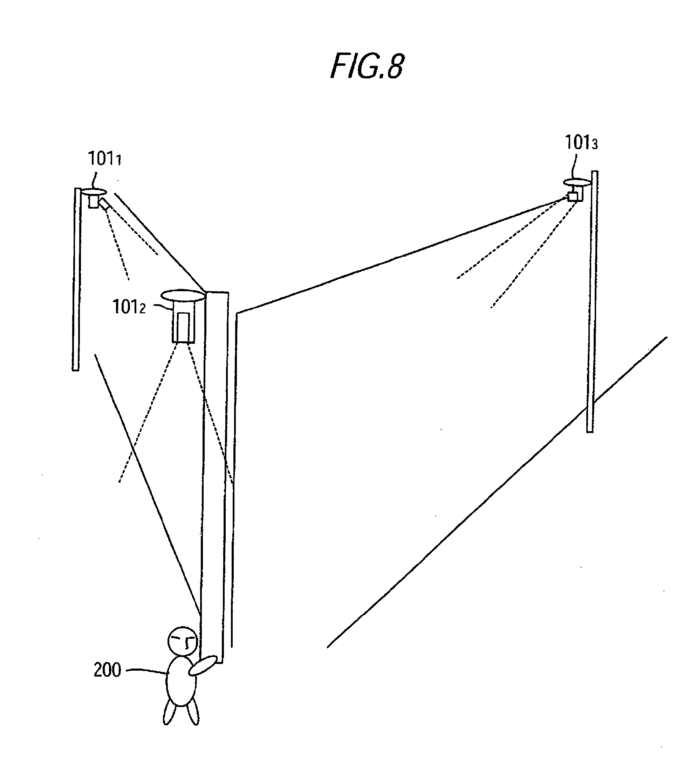

Fig. 8 is a diagram showing just before a state where the subject to be imaged 200 reaches just beneath the camera 101₂ acting as the main camera 101m. The camera control apparatus 109 sets, just before the subject to be imaged 200 reaches beneath the camera 101₂, the camera 101₃ acting as the sub camera 101s so as to cooperate with the camera 101₂. Further, when there is only one sub monitor 103, the camera control apparatus 109 selects and displays on the sub monitor one of the image from the camera 101₁ acting as the sub camera 101s and the image from the camera 101₃ acting as the sub camera 101s in a manner that the image including a larger image of the subject 200 or the image including the front side of the subject is selected. Even if there is only one sub monitor 103, when the screen thereof is divided into plural screens of different sizes so as to be able to display an image thereon, the surveillance can be performed more effectively by controlling the priority order of the sizes and controlling the display positions. When there are a plurality of the sub monitors 103 like this embodiment, the displays may be switched by determining the number of the monitors and the priority order thereof.

Further, in Fig. 8, when the subject to be imaged 200 moves toward the camera 101₃ acting as the sub camera 101s, the camera control apparatus 109 changes the setting condition of the camera 101₂ acting as the main camera 101m and the camera 101₃ acting as the sub camera 101s so as to act as the sub camera 101s and the main camera 101m, respectively. Then, the camera control apparatus cancels the state of making the camera 101₁ acting as the sub camera 101s track the camera 101₂ acting as the main camera 101m to thereby control the direction of the camera so as to be directed to a predetermined standby view angle position. In this case, when the standby position is stored on the camera side as a home position, the camera control apparatus may merely instruct the camera so as to move to the position.

In this manner, according to the camera control system of the embodiment, the camera control apparatus 109 simultaneously transmits the main camera direction information to all the cameras 101. Then, the camera 101 determined so as to act as the main camera 101m in accordance with the address contained in the main camera direction information controls the direction thereof in accordance with the main camera direction information. The camera 101 determined so as to act as the sub camera 101s converts the main camera direction information into the sub camera direction information based on the relative positional relation with the main camera 101m and controls the direction thereof in accordance with the sub camera direction information. Thus, a subject to be imaged can be always caught and displayed on the monitor screen without causing a control delay. That is, a subject to be imaged can be automatically tracked without being lost from the monitor screen.

Further, the camera 101 determined so as to act as the sub camera 101s uses the positional information table recording the distances between the adjacent cameras therein at the time of converting the main camera direction information into the sub camera direction information, the sub camera direction information can be obtained easily in a short time. Further, in the case of recording the images obtained from the plurality of the cameras 101 in the recording device 104, the camera control apparatus 109 extracts and records only the optimum portions of the images, images for a long time can be recorded. Furthermore, in the case of transmitting data to the network, an amount of data can be made small without degrading the image quality of the data.

Although in the aforesaid embodiment, each of all the cameras 101 is arranged to include the control means capable of controlling the view angle, a fixed camera which can not control the view angle thereof may be mixed.

Further, although in the aforesaid embodiment, the external sensor 106 is disposed in adjacent to the installation location of each of the cameras 101 and is used for detecting a subject to be imaged, the information from the external sensors 106 may be used at the time of specifying the main camera.

Although the invention is explained in detail with reference to the specific embodiment, it will be obvious for those skilled in the art that the embodiment may be changed or modified in various manners without departing from the scope of the claims.

The present application is based on Japanese Patent Application (Japanese Patent Application No. 2006-210894) filed on August 2, 2006.

### Industrial Applicability

The invention has an effect that in the case of automatically tracking a moving subject to be imaged, the subject can be tracked without being lost from the monitor screen, and can be suitably applied to the image recording system for surveillance.

## Claims

1. A camera control system (100) comprising:
a plurality of cameras (101) having a main camera (102) and a sub camera cooperating with the main camera (102), and a camera control apparatus (109) configured to communicate bidirectionally with each camera of the plurality of cameras;
the camera control apparatus (109) comprising:
main camera determining means which determines a main camera (102) to image a subject being tracked among a plurality of cameras; and
main camera direction information generating means which generates main camera direction information for performing control of the direction of a camera and including an address of the main camera determined by the main camera determining means and simultaneously transmits the main camera direction information to all of the cameras;
each camera of the plurality of cameras including a control portion (30) to determine whether or not the camera is the main camera (102) based on the address of the main camera that is transmitted
and to convert the main camera direction information into sub camera direction information for making the camera track the main camera (102) and be directed to the same direction as the main camera, when the camera is not the main camera;
image obtaining means which obtains respective images from the plurality of the cameras; and
**characterised in that** the camera control apparatus (109) further comprises:
all camera information obtaining means which obtains information including characteristic data representing features of subjects such as persons or things and moving = directions of a subject to be imaged and view angle size information of all the cameras based on the images from the plurality of the cameras obtained by the image obtaining means,
wherein the main camera determining means determines the main camera based on the information including characteristic data representing features of subjects such as persons or things and moving directions of a subject to be imaged and view angle size information of all the cameras obtained by the all camera information obtaining means.

2. The camera control apparatus according to claim 1, wherein the main camera determining means determines, as the main camera, the camera, an image from which is displayed on a main monitor (102) among a plurality of monitors.

3. The camera control apparatus according to claim 1, wherein the all camera information obtaining means inputs the images from all the cameras into an image recognition device (105) and obtains the information analyzed by the image recognition device (105).

## Patentansprüche

1. Kamerasteuersystem (100), das Folgendes aufweist:
eine Vielzahl von Kameras (101) mit einer Hauptkamera (102) und einer Nebenkamera, die mit der Hauptkamera (102) zusammenwirkt, und eine Kamerasteuervorrichtung (109), die dafür eingerichtet ist, mit jeder Kamera aus der Vielzahl von Kameras bidirektional zu kommunizieren;
wobei die Kamerasteuervorrichtung (109) Folgendes aufweist:
ein die Hauptkamera bestimmendes Mittel, das aus einer Vielzahl von Kameras eine Hauptkamera (102) zum Aufnehmen eines Objekts, das verfolgt wird, bestimmt; und
ein Mittel zum Erzeugen von Hauptkamera-Richtungsinformationen, das Hauptkamera-Richtungsinformationen erzeugt, um die Richtung einer Kamera zu steuern, und die eine Adresse der Hauptkamera umfassen, die von dem die Hauptkamera bestimmenden Mittel bestimmt wurde, und gleichzeitig die Hauptkamera-Richtungsinformationen an alle Kameras überträgt;
wobei jede Kamera aus der Vielzahl von Kameras einen Steuerabschnitt (30) aufweist, um anhand der übertragenen Adresse der Hauptkamera festzustellen, ob die Kamera die Hauptkamera (102) ist oder nicht,
und die Hauptkamera-Richtungsinformationen in Nebenkamera-Richtungsinformationen umzuwandeln, damit die Kamera der Hauptkamera (102) folgt und in dieselbe Richtung gerichtet ist wie die Hauptkamera, wenn die Kamera nicht die Hauptkamera ist;
ein Bilderfassungsmittel, das die jeweiligen Aufnahmen von der Vielzahl von Kameras erfasst; und
**dadurch gekennzeichnet, dass** die Kamerasteuervorrichtung (109) ferner Folgendes aufweist:
ein Mittel zum Erfassen der Informationen zu sämtlichen Kameras, das anhand der Aufnahmen von der Vielzahl von Kameras, die von dem Bilderfassungsmittel erfasst werden, Informationen erfasst, die kennzeichnende Daten, die Merkmale von Objekten wie Personen oder Dingen darstellen, und Bewegungsrichtungen eines aufzunehmenden Objekts und Informationen zur Größe des Blickwinkels sämtlicher Kameras umfassen,
wobei das die Hauptkamera bestimmende Mittel anhand der Informationen, die kennzeichnende Daten, die Merkmale von Objekten wie Personen oder Dingen darstellen, und Bewegungsrichtungen eines aufzunehmenden Objekts und Informationen zur Größe des Blickwinkels sämtlicher Kameras umfassen und von dem Mittel zum Erfassen der Informationen zu sämtlichen Kameras erfasst werden, die Hauptkamera bestimmt.

2. Kamerasteuervorrichtung nach Anspruch 1, wobei das die Hauptkamera bestimmende Mittel die Kamera als Hauptkamera bestimmt, von der ein Bild auf einem Hauptmonitor (102) aus einer Vielzahl von Monitoren angezeigt wird.

3. Kamerasteuervorrichtung nach Anspruch 1, wobei das Mittel zum Erfassen der Informationen zu sämtlichen Kameras die Aufnahmen von sämtlichen Kameras in eine Bilderkennungseinrichtung (105) eingibt und die Informationen erfasst, die von der Bilderkennungseinrichtung (105) analysiert wurden.

## Revendications

1. Système (100) de commande de caméra comprenant :
une pluralité de caméras (101) comprenant une caméra principale (102) et une caméra secondaire qui coopérant avec la caméra principale (102), et un appareil (109) de commande de caméra configuré pour communiquer de manière bidirectionnelle avec chaque caméra de la pluralité de caméras ;
l'appareil (109) de commande de caméra comprenant :
un moyen de détermination de caméra principale qui détermine une caméra principale (102) amenée à prendre en image un sujet suivi parmi une pluralité de caméras ; et
un moyen de génération d'information de direction de caméra principale qui génère une information de direction de caméra principale pour réaliser une commande de la direction d'une caméra et comprenant une adresse de la caméra principale déterminée par le moyen de détermination de caméra principale et qui transmet de manière simultanée l'information de direction de caméra principale à toutes les caméras ;
chaque caméra de la pluralité de caméras comprenant une partie de commande (30) pour déterminer si la caméra est la caméra principale (102) ou non sur la base de l'adresse de la caméra principale qui est transmise.
et pour convertir l'information de direction de caméra principale en une information de direction de caméra secondaire pour amener la caméra à suivre la caméra principale (102) et à être dirigée dans la même direction que la caméra principale, lorsque la caméra n'est pas la caméra principale ;
un moyen d'obtention d'image qui obtient des images respectives à partir de la pluralité de caméras ; et
**caractérisé en ce que** l'appareil (109) de commande de caméra comprend en outre :
un moyen d'obtention d'information de toutes les caméras qui obtient une information comprenant des données caractéristiques représentant les caractéristiques de sujets tels que des personnes ou des objets et des directions de mouvement d'un sujet devant être pris en image et une information de dimension de l'angle de vue de toutes les caméras sur la base des images provenant de la pluralité de caméras obtenues par le moyen d'obtention d'images,
dans lequel le moyen de détermination de caméra principale détermine la caméra principale sur la base de l'information comprenant des données caractéristiques représentant des particularités de sujets tels que des personnes ou des objets et des directions de mouvement d'un sujet devant être pris en image et une information de dimension de l'angle de vue de toutes les caméras obtenue par le moyen d'obtention d'information de toutes les caméras.

2. Appareil de commande de caméra selon la revendication 1, dans lequel le moyen de détermination de caméra principale détermine, comme étant la caméra principale, la caméra dont une image est affiché sur un moniteur principal (102) parmi une pluralité de moniteurs.

3. Appareil de commande de caméra selon la revendication 1, dans lequel le moyen d'obtention d'information de toutes les caméras introduit les images à partir de toutes les caméras dans un dispositif (105) de reconnaissance d'image et obtient l'information analysée par le dispositif (105) de reconnaissance d'image.
